# EUROPEAN PATENT SPECIFICATION

(11) **EP 2 192 695 B1**
(45) Date of publication and mention of the grant of the patent: **11.03.2015**
(21) Application number: 10003121.0
(22) Date of filing: 28.05.2004
(51) Int. Cl.: H04B 7/00, H04M 3/42

(54) **Wireless communications network and method for enabling wireless presence-based services**
Drahtloses Kommunikationsnetz und Verfahren zur Ermöglichung drahtloser Dienste auf Präsenzbasis
Réseau de communication sans fil et procédé pour permettre des services sans fil basés sur la présence

(30) Priority: 11.07.2003 US 486684 P; 13.04.2004 US 823185
(43) Date of publication of application: 02.06.2010
(62) Divisional of application: 04753626.3
(73) Proprietor: Motorola Mobility LLC, Libertyville, IL 60048 (US)
(72) Inventor: Oprescu-Surcobe, Valentin, Northbrook, Illinois 60062 (US); Sayeedi, Shahab M. Sayeedi, Naperville, Illinois 60540 (US)
(74) Representative: Openshaw, Paul Malcolm

(56) References cited:
- WO-A-02/43351
- WO-A-03/032616
- WO-A2-01/72055
- US-A1- 2001 025 314

## Description

### Field of the Invention

The present invention relates generally to wireless communication systems and, in particular, to enabling wireless presence-based services in such systems.

### Background of the Invention

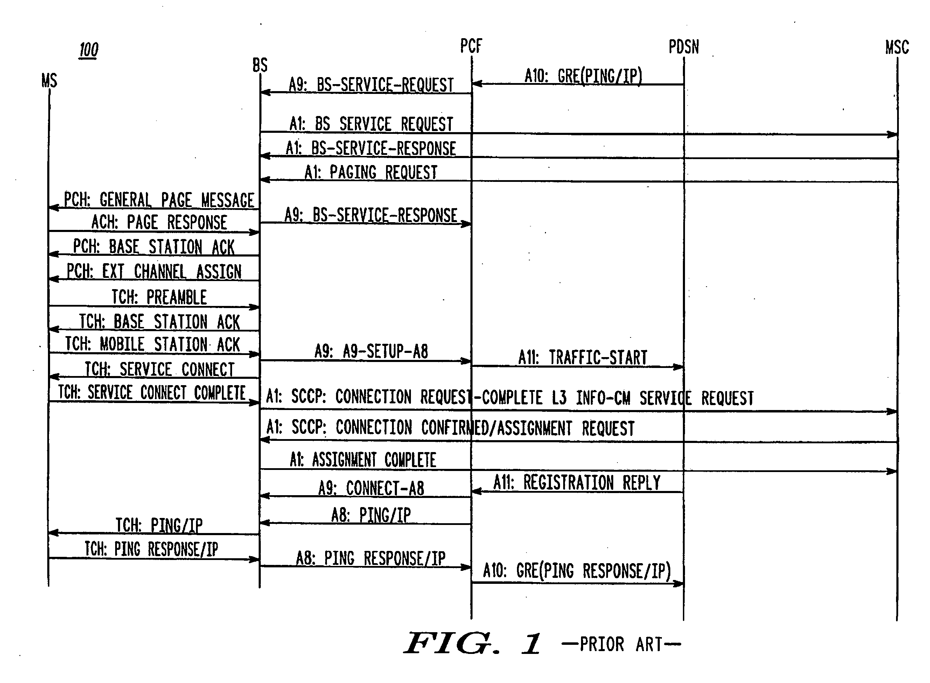

Presence services, such as instant messaging (IM), are well-known to Internet users. These services are also part of 3rd generation (3G) wireless offerings. However, the current wireless paradigm does not handle these services very efficiently. For example, existing presence servers typically maintain presence information by periodically pinging the target mobile station (MS) and use the response or lack of it, as a presence "heart beat" signal. FIG. 1 illustrates a simplified messaging exchange involved in pinging such an MS. As seen in messaging flow diagram 100, the presence server ping triggers, via the packet data serving node (PDSN), substantial messaging between the base station (BS), mobile switching center (MSC), MS, packet control function (PCF), and PDSN to finally deliver the ping response to the presence server (via the PDSN). As can be seen, this paging extensively involves the MSC and A interface. It also uses long (i.e., inefficient) pages on the wireless interface to the MS. The network and MS go through a full data session activation out of dormancy (i.e., call set up with the allocation of a TCH), a packet exchange, and a tearing-down of the connection.

Moreover, each individual service may track presence independent of other services. For example, different IM services may each perform their own pinging of the target MS to obtain substantially the same information. Given the inefficiencies involved in current presence implementations, a need exists for a wireless communications network and method that enable wireless presence-based services more efficiently.

WO 03/032616 A1 discloses a system and method for sharing user event information (such as presence on a network) among mobile (wireless) devices and those connected to fixed IP networks such as the Internet. The system and method support instant messaging between wireless devices and fixed IP network devices and between wireless devices and other wireless devices.

### Brief Description of the Drawings

FIG. 1 is a messaging flow diagram of prior art messaging to support presence-based services.
FIG. 2 is a block diagram depiction of a wireless communication system in accordance with a first embodiment of the present invention.
FIG. 3 is a block diagram depiction of a wireless communication system in accordance with a second embodiment of the present invention.
FIG. 4 is a block diagram depiction of a wireless communication system in accordance with a more generalized embodiment of the present invention.
FIG. 5 is a messaging flow diagram of messaging to support presence-based services in accordance with the first embodiment of the present invention.
FIG. 6 is a logic flow diagram of functionality performed by a wireless communication system in accordance with a first embodiment of the present invention.

### Detailed Description of Embodiments

The need to enable wireless presence-based services more efficiently is addressed by embodiments of the present invention. In general, a wireless presence proxy (WPP) monitors the messaging and messaging responses of a mobile station (MS) via wireless transceiver equipment. Such messaging and messaging responses do not explicitly specify a presence state or state change for the MS. Thus, based upon this monitoring, the WPP infers the presence state / change for the MS and maintains MS location information. The WPP communicates any presence state changes and confirms MS presence state as required by the presence server(s) (225). By monitoring messaging, notifying the server(s) of MS presence, and handling server requests (potentially from many servers for the same MS), embodiments of the present invention reduce or avoid many existing inefficiencies, such as wide area paging and call set up and tear down for each presence ping, from each presence server.

The present invention encompasses a method for enabling wireless presence-based services in which a wireless communications network monitors messaging and messaging responses of a mobile station (MS). The messaging and the messaging responses do not explicitly specify a presence state of the MS or a presence state change by the MS. The wireless communications network infers a change in the presence state of the MS based upon the monitoring and communicates the state change to a presence server.

The present invention also encompasses a wireless communications network that includes wireless transceiver equipment adapted to receive messaging and messaging responses of a mobile station (MS). The wireless communications network also includes a wireless presence proxy (WPP), communicatively coupled to the wireless transceiver equipment. The WPP is adapted to monitor the messaging and the messaging responses of the MS, wherein the messaging and the messaging responses do not explicitly specify a presence state of the MS or a presence state change by the MS. The WPP is further adapted to infer a change in the presence state of the MS based upon the monitoring and to communicate the state change to a presence server.

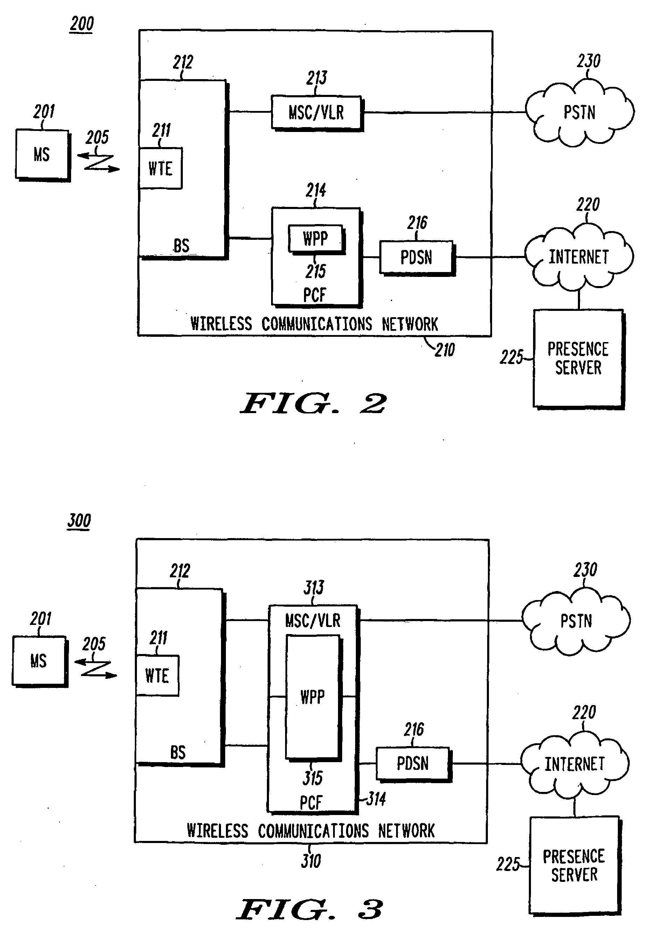

The disclosed embodiments can be more fully understood with reference to FIGs. 2-6. FIGs. 2-4 are a block diagram depictions of wireless communication systems 200, 300, and 400 in accordance with a first, a second, and a more generalized embodiment of the present invention, respectively. Systems 200, 300, and 400 are well-known Code Division Multiple Access (CDMA) systems, specifically CDMA 2000 systems, which are based on the Telecommunications Industry Association / Electronic Industries Association (TIA/EIA) standard IS-2000 and TIA-2001, suitably modified to implement the present invention. (The TIA/EIA can be contacted at 2001 Pennsylvania Ave. NW, Washington, D.C. 20006). Alternative embodiments of the present invention may be implemented in communication systems that employ other technologies such as, but not limited to, IS-136, IS-95, IS-833, WCDMA, HRPD (TIA-878-1 and TIA-1878), "iDEN," "WiDEN," GSM, GPRS, UMTS, and EDGE. Embodiments of the present invention include wireless communication networks 210, 310, and 410 and mobile stations (MSs) 201 and 401. They also include known entities such as presence server 225, internet network 220, and public switched telephone network 230. Although depicted as a single presence server, presence server 225 may represent multiple servers each for individual services such as IM and/or push-to-talk (PTT). Although depicted as mobile phones, MSs in the present invention are not limited to mobile phones. For example, an MS may comprise all manner of devices connected to the wireless communication network such as computers (e.g., desktops and laptops), personal data assistants (PDAs), gaming devices, etc.

Wireless communication networks 210, 310, and 410 communicate with MSs 201 and 401 via CDMA 2000 air interface resources 205 and 405, as depicted in FIGs. 2-4. Resource 205, for example, comprises a variety of well-known channel types, such as access channels, paging channels, and traffic channels. Some of these channels, such as traffic channels, are dynamically assigned and de-assigned to provide user services as requested and according well-known techniques and standards.

Those skilled in the art will recognize that FIGs. 2-4 do not depict all of the network equipment necessary for systems 200, 300, and 400 to operate but only those system components and logical entities particularly relevant to the description of embodiments of the present invention. For example, wireless communication network 410 is depicted as including wireless transceiver equipment (WTE) 411 and wireless presence proxy (WPP) 415. In some embodiments consistent with wireless communication network 410, WTE 411 is included within one or more base transceiver stations (BTSs), supporting the transmission and reception of messaging and messaging responses involving MS 401.

WPP 415 can be implemented using well-known components such as processors, memory, and/or logic circuitry designed to implement algorithms that have been expressed as computer instructions and/or in circuitry. Given an algorithm or a logic flow, those skilled in the art are ware of the many design and development techniques available to implement a WPP that performs the given logic. For example, a WPP consistent with the present invention may be implemented as a stand-alone system component (e.g., a control function), incorporated into well-known system components (such as a control function in an MSC or as depicted by WPP 215 in PCF 214, e.g.), or distributed across well-known system components (as depicted by WPP 315 distributed across MSC 313 and PCF 314, e.g.).

Wireless communication network 210 is depicted in accordance with the first embodiment of the present invention. Network 210 includes well-known system components MSC/VLR 213 and PDSN 216. In addition, network 210 includes PCF 214, into which WPP 215 is incorporated, and BS 212, which includes WTE (such as WTE 211), BTSs, a base site controller (BSC), and a selection and distribution unit (SDU).

Operation of communication system 200 in accordance with the first embodiment of the present invention occurs substantially as follows. WPP 215 monitors the messaging and messaging responses of MS 201, as received via WTE 211. The messaging responses include signaling such as page responses, short data burst (SDB) acknowledgments, status response messages, short message service (SMS) acknowledgments, and layer 2 acknowledgments. The messaging includes MS indications that it is powering up or down, registering or deregistering, entering or exiting an unavailable mode, handing off outside or into wireless communication network 210, or involved in or completing other communication. Such signaling is used today in systems that do not provide presence services. Thus, such messaging responses do not require specialized software in MS 201 nor do they explicitly specify a presence state of MS 201 or a presence state change by MS 201. As a result, WPP 215 infers the presence state and/or state change of MS 201 based upon its monitoring. WPP 215 then communicates this presence state and/or state change for MS 201 to presence server 225. This communication occurs via PDSN 216 and uses internet messaging and Session Initiation Protocol (SIP).

To infer the presence state / change of MS 201, WPP 215 monitors the messaging and messaging responses of MS 201. For example, if MS 201's presence state indicates that it is present, WPP 215 can infer that MS 201's presence state has changed to a non-present state when WPP 215 detects messaging indicating that MS 201 is powering down, deregistering, entering an unavailable mode, handing off outside wireless communication network 210, and involved in other communication. Similarly, if MS 201's presence state indicates that it is non-present, WPP 215 can infer that MS 201's presence state has changed to a present state when WPP 215 detects messaging indicating that MS 201 is powering up, registering, exiting an unavailable mode, handing off into the wireless communication network, and performing other communication.

In the first embodiment, WPP 215 occasionally signals the MS with messaging to which the MS is required to respond. This signaling may be triggered by events such as a periodic timer expiration, the expiration of a timer set to a randomly chosen interval, or receiving a request (e.g., a ping request) from presence server 225. The messaging to which MS 201 is required to respond includes messaging such as a page, a short data burst (SDB) message, a status request message, and a short message service (SMS) message.

WPP 215 maintains (i.e., stores and/or updates) last-known-location information for MS 201 based on the messaging and the messaging responses WPP 215 monitors. This last-known-location information is a cell ID, in the first embodiment, although it may alternatively include a base station ID, a list of cell lDs, or a location area code (LAC). By storing location information in this manner, MS 201 can be signaled only in the cell (or cells) it is believed to be operating. This contributes to the efficiency of the first embodiment in supporting presence.

When WPP 215 receives a messaging response in response to the signaling it initiated, WPP 215 can infer that there is no change in the presence state of MS 201. It may be that MS 201 has changed location, i.e., MS 201 responds from a cell different than that indicated by WPP 215's last-known-location information for MS 201. In this case, WPP 215 updates its last-known-location information for MS 201. Also, WPP 215 may confirm the presence state of MS 201 (although it has not changed) to presence server 225. This confirmation may allow presence server 225 to reset its ping timer for MS 201. Likewise, WPP 215 may also use its inference that there is no change in the presence state of MS 201 to start or stop timers it uses for maintaining MS 201's presence state information.

WPP 215 may not receive a response to the signaling it initiated. WPP 215 will use a timer (or timers) to establish a response period in which to wait for a response, for any repeated signaling, and for attempts using other forms of signaling (such as MSC directed signaling, which is described below). When no response is received within the response period (i.e., a messaging response of no response), WPP 215 can infer a change in the presence state of MS 201 from present to non-present.

When WPP 215 initiates signaling to MS 201 according to its last-known-location information but BS 212 does not receive a response from MS 201, BS 212 requests MSC 213 to signal MS 201 using its paging area information for MS 201 (i.e., MSC directed signaling). If MS 201 has changed location, then MS 201 should respond, although from a cell different than that indicated by WPP 215's last-known-location information. In this way, MS 201's presence state can be confirmed and WPP 215's last-known-location information updated.

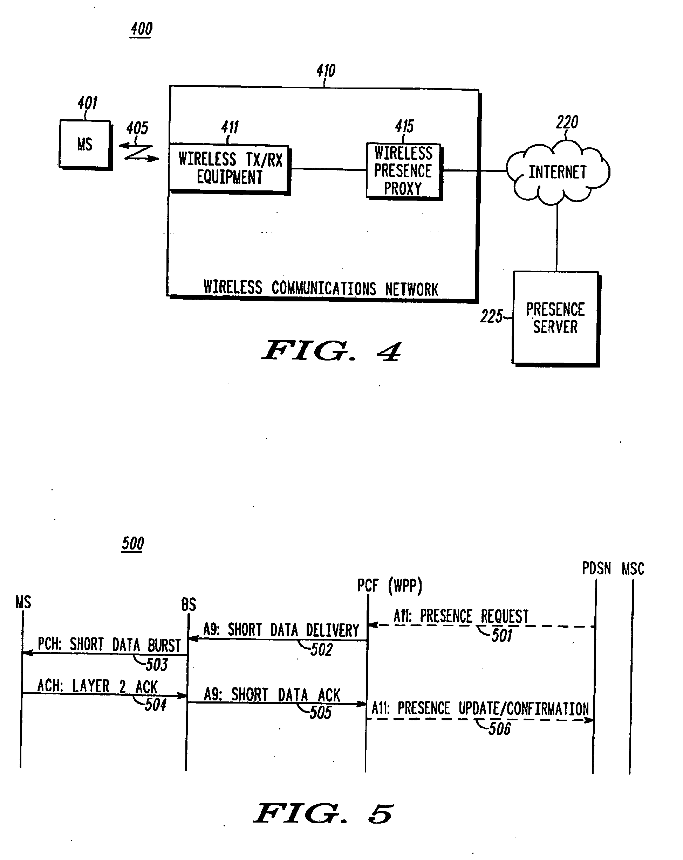

FIG. 5 is a messaging flow diagram of messaging to support presence-based services in accordance with the first embodiment of the present invention. WPP 215 may receive a request for MS 201's current status (such as presence request message 501) from presence server 225 (via PDSN 216). Instead, WPP 215 may itself occasionally (perhaps periodically) seek to confirm MS 201's presence status. Whatever the trigger, WPP 215 sends a signaling request message to BS 212, specifically, A9-Short Data Delivery message 502, which indicates a signaling location (e.g., a cell ID) within which to signal MS 201. BS 212 then signals MS 201 with Short Data Burst 503 on the paging channel in the cell indicated.

In the first embodiment, MS 201 responds on an access channel with layer 2 acknowledgment 504, which is received by BS 212. However, MS 201 need not have responded for BS 212 to send an indication to WPP 215 of whether or not a response from MS 201 was received. Specifically, BS 212 sends A9-Short Data Ack message 505 to WPP 215 indicating that MS 201 responded. From such messaging responses, WPP 215 can then infer MS 201's presence status. If necessary, WPP 215 updates or confirms this presence status with presence server 225 (via PDSN 216) using presence update/confirmation message 506. This presence server messaging is only necessary for presence state changes or when confirmation is requested by presence server 225.

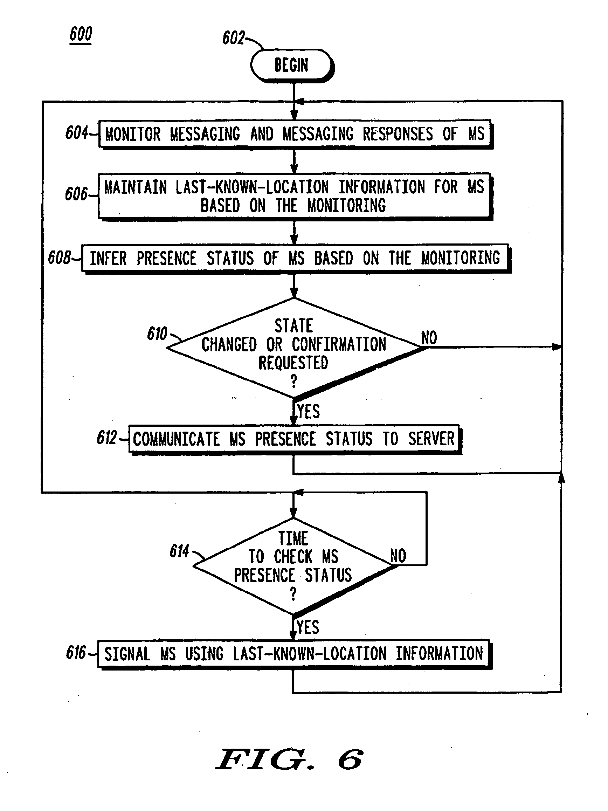

FIG. 6 is a logic flow diagram of functionality performed by a wireless communication system in accordance with a first embodiment of the present invention. Logic flow 600 begins (602) with a wireless communication network monitoring messaging and messaging responses of an MS. Based on this monitoring, the network maintains (604) last-known-location information for the MS and infers (608) the presence status of the MS. If (610) the MS presence status has changed or if a presence server has requested presence confirmation, the network communicates the inferred status of the MS to the requesting server or to those servers that need to be apprised of the new status. Logic flow 600 then returns to block 604 to continue this monitoring loop.

While performing the monitoring loop, the wireless network also awaits triggers that indicate that it is time to check the MS's presence status. Such triggers include the expiration of network presence timers and the receipt of presence server requests. When (614) a triggering event occurs, the network signals (616) the MS where indicated by the last-known-location information with messaging to which the MS is required to respond. Logic flow 600 then returns to block 614 to continue this signaling loop.

In the foregoing specification, the present invention has been described with reference to specific embodiments. However, one of ordinary skill in the art will appreciate that various modifications and changes may be made without departing from the spirit and scope of the present invention as set forth in the appended claims. Accordingly, the specification and drawings are to be regarded in an illustrative rather than a restrictive sense, and all such modifications are intended to be included within the scope of the present invention. In addition, those of ordinary skill in the art will appreciate that the elements in the drawings are illustrated for simplicity and clarity, and have not necessarily been drawn to scale. For example, the dimensions of some of the elements in the drawings may be exaggerated relative to other elements to help improve an understanding of the various embodiments of the present invention.

Benefits, other advantages, and solutions to problems have been described above with regard to specific embodiments of the present invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims. As used herein and in the appended claims, the term "comprises," "comprising," or any other variation thereof is intended to refer to a non-exclusive inclusion, such that a process, method, article of manufacture, or apparatus that comprises a list of elements does not include only those elements in the list, but may include other elements not expressly listed or inherent to such process, method, article of manufacture, or apparatus.

The terms a or an, as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly, and not necessarily mechanically.

## Claims

1. A method for enabling wireless presence-based services comprising:
monitoring (604), by a wireless communications network, messaging and messaging responses exchanged with a mobile station MS, wherein the messaging and the messaging responses are from a group of messages that do not expressly specify a presence state of the MS or a presence state change by the MS and which group of messages consist of powering up messages, powering down messages, registering messages, deregistering messages, exiting an unavailable mode messages, entering an unavailable mode messages, handing off outside the wireless communication network messages, handing off into the wireless communication network messages, and involved in other communication messages;
and wherein the method is **characterized by**:
inferring (608), by the wireless communications network, a change in the presence state of the MS based upon the monitored messaging exchanged with the MS, wherein inferring comprises inferring the MS presence state has changed when the presence state of the MS indicates that the MS is present; and
communicating (612), by the wireless communications network, the state change to a presence server.

2. The method of claim 1, wherein the messaging responses comprise responses from the group consisting of a page response, a short data burst SDB acknowledgment, a status response message, a short message service SMS acknowledgment, and a layer 2 acknowledgment.

3. The method of claim 1, further comprising:
signaling (616), by the wireless communications network, the MS with messaging to which the MS is required to respond.

4. The method of claim 3, wherein messaging to which the MS is required to respond comprises messaging from the group consisting of a page, a short data burst SDB message, a status request message, and a short message service SMS message.

5. The method of claim 3,
wherein monitoring (604) comprises maintaining last-known-location information for the MS based on the messaging and the messaging responses,
wherein signaling (616)the MS comprises signaling the MS in a group of at least one cell based on the last-known-location information for the MS.

6. The method of claim 3,
wherein monitoring (604) comprises detecting that a period of time has passed after signaling the MS in which no response to the signaling has been received,
wherein the no response within the period of time is a messaging response,
wherein inferring (608) comprises inferring a change in the presence state of the MS based upon the messaging response when the presence state of the MS indicates that the MS is present.

7. The method of claim 3,
wherein monitoring (604) comprises detecting that a period of time has passed after repeatedly signaling the MS in which no response to the signaling has been received,
wherein the no response within the period of time is a messaging response,
wherein inferring (608) comprises inferring a change in the presence state of the MS based upon the messaging response when the presence state of the MS indicates that the MS is present.

8. A wireless communications network (200, 300, 400) comprising a wireless transceiver equipment (211, 411) adapted to receive messaging and messaging responses of a mobile station MS (201, 401) and wherein the wireless communications network comprises
a wireless presence proxy (215, 315, 415), communicatively coupled to the wireless transceiver equipment,
adapted to monitor the messaging and the messaging responses of the MS, wherein the messaging and the messaging responses are from a group of messages that do not expressly specify a presence state of the MS or a presence state change by the MS and which group of messages consist of powering up messages, powering down messages, registering messages, deregistering messages, exiting an unavailable mode messages, entering an unavailable mode messages, handing off outside the wireless communication network messages, handing off into the wireless communication network messages, and involved in other communication messages, the wireless communications network **characterized by** being
adapted to infer a change in the presence state of the MS based upon the monitored messages of the MS, wherein being adapted to infer comprises being adapted to infer the MS presence state has changed when the presence state of the MS indicates that the MS is present, and,
adapted to communicate the state change to a presence server (225).

## Patentansprüche

1. Verfahren zur Ermöglichung drahtloser Dienste auf Präsenzbasis, umfassend:
das Überwachen (604) von Nachrichten und Antwort-Nachrichten, die mit einer Mobilstation MS ausgetauscht werden, durch ein drahtloses Kommunikationsnetzwerk, wobei die Nachrichten und die Antwort-Nachrichten einer Gruppe von Nachrichten entstammen, die nicht ausdrücklich einen Präsenzstatus der MS oder eine Änderung des Präsenzstatus der MS spezifizieren und wobei die Gruppe von Nachrichten aus Einschalt-Benachrichtigungen, Ausschalt-Benachrichtigungen, Anmeldungs-Benachrichtigungen, Abmeldungs-Benachrichtigungen, Benachrichtigungen über das Beenden eines nichtverfügbaren Modus, Benachrichtigungen über das Eintreten eines nichtverfügbaren Modus, Benachrichtigungen über eine Übergabe außerhalb des drahtlosen Kommunikationsnetzwerkes,
Benachrichtigungen über eine Übergabe an das drahtlose Kommunikationsnetzwerk besteht und an anderen Kommunikationsmitteilungen beteiligt ist;
und wobei das Verfahren **gekennzeichnet ist durch**:
das Rückschließen (608) auf eine Änderung des Präsenzstatus der MS auf der Basis der überwachten Nachrichten, die mit der MS ausgetauscht werden, **durch** das drahtlose Kommunikationsnetzwerk, wobei das Rückschließen das Rückschließen darauf umfasst, dass sich der Präsenzstatus der MS geändert hat, wenn der Präsenzstatus der MS anzeigt, dass die MS anwesend ist;
und das Kommunizieren (612) der Statusänderung an einen Präsenzserver **durch** das drahtlose Kommunikationsnetzwerk.

2. Verfahren nach Anspruch 1, wobei die Antwort-Nachrichten Antworten von einer Gruppe umfassen, die aus einer Funkruf-Antwort, einer Short-Data-Burst-SDB-Empfangsbestätigung, einer Statusrückmeldung, einer Short-Message-Service-SMS-Empfangsbestätigung und einer Schicht 2-Empfangsbestätigung besteht.

3. Verfahren nach Anspruch 1, ferner umfassend:
das Melden (616) der Nachricht, auf welche die MS antworten muss,
durch das drahtlose Kommunikationsnetzwerk an die MS.

4. Verfahren nach Anspruch 3, wobei die Nachricht, auf welche die MS antworten muss, Nachrichten aus der Gruppe umfasst, die aus einem Funkruf, einer Short-Data-Burst-SDB-Nachricht, einer Statusabfragemeldung und einer Short-Message-Service-SMS-Nachricht besteht.

5. Verfahren nach Anspruch 3,
wobei die Überwachung (604) das Beibehalten der Information über den zuletzt bekannten Ort der MS auf der Basis der Nachricht und der Antwort-Nachricht umfasst,
wobei das Melden (616) an die MS das Melden an die MS in einer Gruppe von mindestens einer Zelle auf der Basis der Information über den zuletzt bekannten Ort der MS umfasst.

6. Verfahren nach Anspruch 3,
wobei die Überwachung (604) das Detektieren umfasst, dass nach der Meldung an die MS eine Zeitspanne verstrichen ist, in der keine Antwort auf die Meldung empfangen wurde,
wobei das Nichtantworten innerhalb der Zeitspanne eine Antwort-Nachricht ist;
wobei das Rückschließen (608) das Rückschließen auf eine Änderung des Präsenzstatus der MS auf der Basis der Antwort-Nachricht umfasst, wenn der Präsenzstatus der MS anzeigt, dass die MS anwesend ist.

7. Verfahren nach Anspruch 3,
wobei die Überwachung (604) das Detektieren umfasst, dass nach einer wiederholten Meldung an die MS eine Zeitspanne verstrichen ist, in der keine Antwort auf die Meldung empfangen wurde,
wobei die Nichtantwort innerhalb der Zeitspanne eine Antwort-Nachricht ist,
wobei das Rückschließen (608) das Rückschließen auf eine Änderung des Präsenzstatus der MS auf der Basis der Antwort-Nachricht umfasst, wenn der Präsenzstatus der MS anzeigt, dass die MS anwesend ist.

8. Drahtloses Kommunikationsnetzwerk (200, 300, 400), umfassend eine Transceiver-Einrichtung (211, 411), die geeignet ist für den Empfang von Nachrichten und Antwort-Nachrichten einer Mobilstation MS (201, 401), wobei das drahtlose Kommunikationsnetzwerk umfasst:
einen drahtlosen Präsenz-Proxy (215, 315, 415), der mit der drahtlosen Transceiver-Einrichtung (215, 315, 415) kommunizierend verbunden ist und angepasst ist für die Überwachung der Nachrichten und der Antwort-Nachrichten der MS, wobei die Nachrichten und die Antwort-Nachrichten einer Gruppe entstammen, die nicht ausdrücklich einen Präsenzstatus der MS oder eine Präsenzstatusänderung durch die MS spezifiziert, und
wobei die Gruppe von Nachrichten aus Einschalt-Benachrichtigungen, Ausschalt-Benachrichtigungen, Anmeldungs-Benachrichtigungen, Abmeldungs-Benachrichtigungen, Benachrichtigungen über das Beenden eines nichtverfügbaren Modus, Benachrichtigungen über das Eintreten eines nichtverfügbaren Modus, Benachrichtigungen über eine Übergabe außerhalb des drahtlosen Kommunikationsnetzwerkes, Benachrichtigungen über eine Übergabe an das drahtlose Kommunikationsnetzwerk besteht und an anderen Kommunikationsmitteilungen beteiligt ist, wobei das drahtlose Kommunikationsnetzwerk **dadurch gekennzeichnet ist, dass** dieses angepasst ist für den Rückschluss auf eine Änderung des Präsenzstatus der MS auf der Basis der überwachten Nachrichten der MS, wobei die Anpassung rückzuschließen die Anpassung für den Rückschluss darauf umfasst, dass sich der Präsenzstatus der MS geändert hat, wenn der Präsenzstatus der MS anzeigt, dass die MS anwesend ist, und
angepasst ist, den geänderten Präsenzstatus an einen Präsenzserver (225) zu kommunizieren.

## Revendications

1. Procédé pour permettre des services sans fil à base de présence comprenant:
surveiller (604), par un réseau de communication sans fil, de la messagerie et des réponses messagerie échangés avec une station mobile MS, dans lequel la messagerie et les réponses messagerie proviennent d'un groupe de messages qui ne spécifient pas explicitement un état présence de la MS ou un changement d'état présence de la part de la MS, le groupe consistant des messages de mise en marche, des messages de mise hors marche, des messages d'enregistrement, des messages de désinscription, des messages de sortie d'un mode indisponible, des messages d'entrée dans un mode indisponible, des messages de transfert hors réseau de communication sans fil, des messages de transfert vers le réseau de communication sans fil, et des messages de participation dans d'autres communications;
et dans lequel le procédé est **caractérisé par**:
déduire (608), par le réseau de communication sans fil, un changement de l'état présence de la MS à base de la messagerie surveillée échangé avec la MS, dans lequel déduire comprend déduire que l'état présence a changé lorsque l'état présence de la MS indique que la MS est présente; et
communiquer (612), par le réseau de communication sans fil, le changement d'état à un serveur présence.

2. Le procédé selon la revendication 1, dans lequel les réponses messagerie comprennent des réponses du groupe consistant d'une réponse télé-avertissement (page response), une confirmation de rafale de données courte SDB (short data burst), un message de réponse état, une confirmation de service de messagerie courte SMS (short message service), et une confirmation de couche 2.

3. Le procédé selon la revendication 1, comprenant en outre:
signaler (616), par le réseau de communication sans fil, la MS avec de la messagerie à laquelle la MS doit nécessairement répondre.

4. Le procédé selon la revendication 3, dans lequel la messagerie à laquelle la MS doit nécessairement répondre comprend de la messagerie du groupe consistant d'un télé-avertissement (page), un message de rafale de données courte SDB, un message d'enquête état, et un message de service de messagerie courte SMS.

5. Le procédé selon la revendication 3,
dans lequel surveiller (604) comprend maintenir de l'information de dernier endroit connu pour la MS à base de la messagerie et des réponses messagerie,
dans lequel signaler (616) la MS comprend signaler la MS dans un groupe d'au moins une cellule à base de l'information de dernier endroit connu pour la MS.

6. Le procédé selon la revendication 3,
dans lequel surveiller (604) comprend détecter qu'une période de temps a passé après signaler la MS et que dans ladite période aucune réponse à la signalisation n'a été reçue,
dans lequel la non-réponse dans la période de temps est une réponse messagerie,
dans lequel déduire (608) comprend déduire un changement de l'état présence de la MS à base de la réponse messagerie lorsque l'état présence de la MS indique que la MS est présente.

7. Le procédé selon la revendication 3,
dans lequel surveiller (604) comprend détecter qu'une période de temps a passée après signaler à répétition la MS et que dans ladite période aucune réponse à la signalisation n'a été reçue,
dans lequel la non-réponse dans la période de temps est une réponse messagerie,
dans lequel déduire (608) comprend déduire un changement de l'état présence de la MS à base de la réponse messagerie lorsque l'état présence de la MS indique que la MS est présente.

8. Un réseau de communication sans fil (200, 300, 400) comprenant un matériel émetteur-récepteur sans fil (211, 411) adapté à recevoir de la messagerie et des réponses messagerie d'une station mobile MS (201, 401) et dans lequel le réseau de communication sans fil comprend :
un proxy présence sans fil (215, 315, 415), accouplé en communication au matériel émetteur-récepteur sans fil,
adapte pour surveiller la messagerie et les réponses messagerie de la MS, dans lequel la messagerie et les réponses messagerie proviennent d'un groupe de messages qui ne spécifient pas explicitement un état présence de la MS ou un changement d'état présence de la part de la MS, le groupe consistant des messages de mise en marche, des messages de mise hors marche, des messages d'enregistrement, des messages de désinscription, des messages de sortie d'un mode indisponible, des messages d'entrée dans un mode indisponible, des messages de transfert hors réseau de communication sans fil, des messages de transfert vers le réseau de communication sans fil, et des messages de participation dans d'autres communications;
le réseau de communication sans fil **caractérisé par** être adapté pour déduire un changement de l'état présence de la MS à base des messages surveillés de la MS, dans lequel être adapté pour déduire comprend être adapté pour déduire que l'état présence a changé lorsque l'état présence de la MS indique que la MS est présente; et
adapté pour communiquer le changement d'état à un serveur présence (225).
